# EUROPÄISCHE PATENTANMELDUNG

(11) **EP 2 481 940 A2**
(43) Veröffentlichungstag der Anmeldung: **01.08.2012**
(21) Anmeldenummer: 12150116.7
(22) Anmeldetag: 04.01.2012
(51) Int. Cl.: F16C 17/14

(54) **Lagerringsegment, Lagerring, Lager, Antriebswelle und Unterwasserkraftwerk**

(30) Priorität: 27.01.2011 DE 102011003226
(71) Anmelder: Aktiebolaget SKF, 41 550 Göteborg (SE)
(72) Erfinder: Götz, Johannes, 97520 Röthlein (DE); Menig, Fred, 97717 Sulzthal (DE)
(74) Vertreter: Schonecke, Mitja

(57) **Zusammenfassung**

Ein Lagerring oder Lagerringsegment 110;110a;110b für ein Radiallager 100, das eine Befestigungsmöglichkeit 120 zur Befestigung des Lagerringsegments 110;110a;110b an einem zu lagernden Bauelement 130 umfasst, wobei das Lagerringsegment 110;110a;110b eine Beschichtung 125 umfasst, die eine Reibkraft zwischen dem Lagerringsegment 110;110a;110b und dem zu lagernden Bauteil 130 erhöht.

## Beschreibung

Die vorliegende Erfindung liegt auf dem Gebiet der wartungsarmen Lagerung von Antriebswellen, insbesondere von Antriebswellen in Unterwasserkraftwerken.

Aus dem Bereich der konventionellen Technik sind Unterwasserkraftwerke bereits bekannt. Im Folgenden werden bekannte Lagerungskonzepte für Unterwasserkraftwerke kurz zusammengefasst. Die DE102009005556A1 offenbart ein Konzept zur Spülung von Unterwasserkraftwerken, bei denen bewusst auf eine Kapselung der eingesetzten Lager verzichtet wird. Bei derartigen Konstruktionen ist der Bereich, der in direktem Kontakt mit dem Umgebungswasser steht, gegen einen übermäßigen Sedimenteinfall zu schützen. Des Weiteren muss der Bewuchs in diesem Bereich begrenzt werden. Eine der diesbezüglichen Maßnahmen besteht darin, den gefluteten Bereich und insbesondere die Lager sowie die diesen zugeordneten Komponenten, wie Dichtungselemente und dergleichen, zu spülen.

Ein Konzept sieht vor, an einem Unterwasserkraftwerk mindestens einen Spülanschluss anzulegen, durch den der Anlage von außen ein Spülmedium zugeleitet werden kann. Demnach liegt in der Anlage selbst zwischen dem externen Spülanschluss und dem zu spülenden Bereich kein Fördersystem, wie eine Pumpe oder dergleichen, für das Spülmedium vor. Des Weiteren wird auf ein zusätzliches Filtersystem verzichtet. Stattdessen wird am externen Spülanschluss das Spülmedium mit einem solchen Überdruck zugeführt, dass eine hinreichend starke Durchströmung des zu spülenden Bereichs und eine Abströmung zum Außenbereich erfolgt, wodurch Sedimente und bevorzugt ein ursprünglich vorliegender Bewuchs nach außen transportiert werden.

Ein Konzept zur optimierten Leistungsregelung und Steuerung von Unterwasserkraftwerken ist in der DE102008053732B3 offenbart. Die DE102008031615A1 zeigt eine als Ganzes handhabbare und als Einheit montierbare Generator-Baueinheit, die von der eigentlichen Antriebswelle eines Unterwasserkraftwerks getrennt transportiert und montiert werden kann. Diese umfasst mit einem Generatorläufer und einem Generatorstator, die Grundkomponenten eines elektrischen Generators. Zusätzlich ist ein Generatorgehäuse Teil der Generator-Baueinheit. Die Steuerungs- und Leistungskomponenten des elektrischen Generators können zusätzlich in die Generator-Baueinheit aufgenommen werden.

Die DE102008061912A1 beschäftigt sich mit Lagerkissen, beispielsweise für seewassertaugliche Gleitlager. Für einen sich hydrodynamisch aufbauenden Schmierfilm und der damit verbundenen parabolischen Druckentwicklung für weiche beziehungsweise elastische Gleitbeläge tritt eine konkave Einfederung im zentralen Bereich auf. Diese führt zu einer Lagerspalterweiterung und einem Einbruch der Druckverteilung im mittigen Bereich der Gleitfläche. Dem wird dadurch entgegengewirkt, dass die Materialstärke des Gleitbelags in Richtung der Flächennormalen der Gleitfläche an den beim Betrieb auftretenden Schmierfilmdruck angepasst wird. In den Bereichen hohen Drucks, die um das Flächenzentrum der Gleitfläche liegen, wird eine verringerte Materialstärke verwendet, während die Randbereiche eine hohe Materialstärke aufweisen. Dabei wird das Profil der Gleitfläche erhalten, das typischerweise jenem der Gegenlauffläche entspricht. Die Anpassung der Materialstärke des Gleitbelags erfolgt durch eine entsprechende Profilierung der Auflagefläche am Grundkörper, die der Rückseite des Gleitbelags gegenüberliegt. Im einfachsten Fall wird ein erhabener Sockel im Zentralbereich der Auflagefläche des Grundkörpers vorgesehen. Eine genauere Anpassung kann durch einen mehrfach gestuften oder konvexen Verlauf der Auflagefläche bewirkt werden.

Die DE102008006899A1 offenbart ein Konzept zur Lagerung einer Antriebswelle eines Unterwasserkraftwerks. Hier wird eine Lageranordnung zur Lagerung einer Welle bereitgestellt, wobei die Lageranordnung wenigstens ein Radialgleitlager und wenigstens ein Axialgleitlager aufweist und wobei die Lageranordnung durch von außen eindringendes Wasser schmierbar ist.

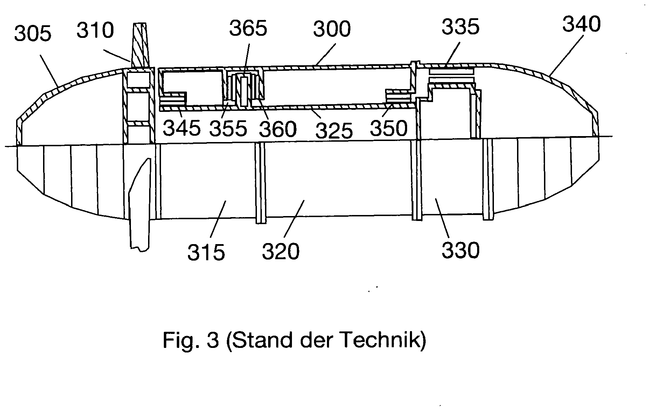

Die Figur 3 zeigt einen schematischen Aufbau eines Unterwasserkraftwerks. Die Figur 3 zeigt eine Maschinengondel 300 mit einem segmentierten Aufbau. An die Maschinengondel 300 schließen sich im vorderen Bereich eine Haube 305 und eine propellerförmige Wasserturbine 310 an. Die Maschinengondel 300 umfasst zwei Segmente 315 und 320, die die Antriebswelle 325 enthalten. In einem weiteren Segment 330 befindet sich ein Generator 335, der mit der Antriebswelle 325 gekoppelt ist. Eine weitere Haube 340 schließt das Unterwasserkraftwerk nach dem Generator 335 ab.

Die Haube 305 bildet mit der Wasserturbine 310 eine umlaufende Einheit, die mit der Antriebswelle 325 gekoppelt ist. Zur Lagerung der Antriebswelle 325 sind mehrere Gleitlager vorgesehen. Im der Wasserturbine 310 zugewandten vorderen Bereich der Antriebswelle 325 befindet sich ein Radialgleitlager 345. Im dem Generator 335 zugewandten hinteren Bereich der Antriebswelle 325 befindet sich ein weiteres Radialgleitlager 350. Axiale Kräfte der Antriebswelle werden durch die beiden Axialgleitlager 355 und 360 aufgenommen, die eine mit der Antriebswelle 325 verbundene Spurscheibe 365 axial abstützen.

Die Gleitlager 345, 350, 355 und 360 können dabei seewasserfest ausgeführt sein, insbesondere wassergeschmiert. Damit ist es möglich, den gesamten Innenbereich der Maschinengondel 300 zu fluten und auf aufwändige Abdichtungen, insbesondere auch der Lager zu verzichten.

Die zum Einsatz kommenden Gleitlager 345, 350, 355 und 360 werden teilweise direkt auf der Antriebswelle 325 realisiert. Zur Realisierung der Radialgleitlager 345, 350 werden an den beiden jeweiligen Enden der Welle 325 über eine Breite von ca. 100 - 4000 mm sehr harte Beschichtungen aufgetragen, die dann jeweils den Innenring für eines der Radialgleitlager 345,350 darstellen. Als Beschichtungsverfahren kann z.B. das Hochgeschwindigkeits-Flammspritzen (auch HVOF, abgeleitet von High-Velocity-Oxygen-Fuel) oder ein anderes thermisches Beschichtungsverfahren zur Oberflächenbehandlung verwendet werden. Darüber hinaus kann an diesen Stellen zunächst ein Stahlring durch Schweißen aufgebracht werden und auf dessen Oberfläche die Beschichtung erfolgen. Das Lager läuft dabei direkt im Wasser bzw. Seewasser.

Bei der konventionellen Vorgehensweise werden Abschnitte der Antriebswelle 325 mit einer Beschichtung versehen, bzw. es erfolgt erst eine Befestigung von Lagerringen auf den jeweiligen Wellenenden durch Schweißen und anschließend eine Beschichtung dieser Ringe. Darüber hinaus müssen die beschichteten Stellen nachbearbeitet werden, z.B. durch Schleifen. Ein Austausch der Lager bei einem Schaden ist direkt nicht möglich, so dass im Schadenfall die komplette Welle repariert bzw. ausgetauscht werden muss.

Nachteilig an den konventionellen Konzepten ist die Notwendigkeit, eine große einteilige Welle handhaben zu müssen. Die Länge einer solchen Antriebswelle, die zumeist als Hohlwelle ausgeführt ist, kann mehrere Meter betragen, wobei der Durchmesser ebenfalls über einem Meter liegen kann. Typische Werte sind 3 - 15 m Länge bei einem Durchmesser von 100 mm bis 6000 mm und bei einer Leistung um 50kW - 15 MW. Darüber hinaus kann sich das Gewicht einer solchen Antriebswelle leicht auf mehrere Tonnen belaufen, ein typisches Gewicht wäre 1 - 100 t.

Ein Problem besteht nun darin, dass eine sehr große und schwere Antriebswelle 325 gehandhabt, transportiert, auf eine Maschine aufgespannt, beschichtet werden muss, um anschließend die Lagerstellen zu schleifen, was sehr kostenintensiv ist. Ferner ist problematisch, dass bei der Variante des Festschweißens der Lagerringe auf der Welle ein Materialverzug eintreten kann. Darüber hinaus wird eine Wartung der Lagerung erschwert. Fällt ein solches Lager in der Anwendung aus, muss die komplette Welle zur Reparatur gebracht bzw. ausgetauscht werden. Die Folge sind sehr lange Maschinenstillstandszeiten.

Es ist daher die Aufgabe der vorliegenden Erfindung, ein verbessertes Konzept zur Lagerung einer Antriebswelle für ein Unterwasserkraftwerk zu schaffen.

Die Aufgabe wird durch ein Lagerringsegment, einen Lagerring, ein Lager, eine Antriebswelle und ein Unterwasserkraftwerk gemäß den unabhängigen Ansprüchen gelöst.

Ein Kerngedanke der vorliegenden Erfindung liegt in der Erkenntnis, dass Radiallager und Antriebswelle eines Unterwasserkraftwerks mechanisch entkoppelt werden können. Dies erlaubt zum einen, die Antriebswelle zu kürzen und somit leichter handhabbar zu machen, zum anderen, das Lager getrennt von der Antriebswelle herstellen zu können. Somit wird auch das Lager leichter handhabbar und etwaige Beschichtungen können erheblich leichter durchgeführt bzw. aufgebracht werden. Die mechanische Trennung kann z.B. dadurch realisiert werden, dass an einen Lagerring des Radiallagers eine Befestigungsmöglichkeit wie z.B. ein Flansch vorgesehen wird. Der Lagerring selbst kann einstückig sein oder sich aus mehreren Lagerringsegmenten zusammensetzen. Die Lagerringsegmente können untereinander gleich sein, in Ausführungsbeispielen können diese jedoch auch unterschiedlich sein.

Der im Folgenden beschriebene Lagerring kann daher in Ausführungsbeispielen in verschiedenen Ausführungsvarianten vorliegen.

Darüber hinaus ist ein Kerngedanke der vorliegenden Erfindung, die notwendigen Befestigungsmittel, wie z.B. Schrauben oder Bolzen, die zur Befestigung des Lagerrings an einem zu lagernden Bauteil verwendet werden, möglichst aufwandgünstig zu halten, d.h. beispielsweise mit möglichst wenig Schrauben auszukommen. Dies kann dadurch erreicht werden, dass eine Beschichtung an dem Lagerring bzw. an dem zu lagernden Bauteil auf gebracht wird, die eine Reibkraft zwischen dem Lagerring und dem zu lagernden Bauteil erhöht. Durch die erhöhte Reibkraft können Befestigungsmittel, wie z.B. Schrauben oder Bolzen, eingespart werden. Dies reduziert den Wartungs- und Montageaufwand, da die entsprechenden Teile somit schneller montiert und demontiert werden können.

In Ausführungsbeispielen kann als Befestigungsmöglichkeit auch ein Flansch an dem Lagerringsegment bzw. an einem Lagerring vorgesehen sein. Dieser kann ebenfalls aus mehreren Segmenten zusammengesetzt sein, die jeweils untereinander gleich oder unterschiedlich sein können. In Ausführungsbeispielen können beispielsweise Lagerringsegmente entsprechende Flanschsegmente aufweisen. Wenn im Folgenden der Flansch beschrieben wird, kann dieser daher ebenfalls einstückig oder mehrstückig, d.h. aus Flanschsegmenten zusammengesetzt, ausgebildet sein. In Ausführungsbeispielen kann die Beschichtung demnach auch an dem Flansch vorgesehen sein.

Dieser Flansch dient z. B. zur Befestigung des Lagerrings an der Antriebswelle. In Ausführungsbeispielen kann der Flansch sowohl an dem Lagerinnenring als auch an dem Lageraußenring angebracht sein. In Ausführungsbeispielen kann der Lagerring mit dem Flansch einstückig ausgebildet sein. In anderen Ausführungsbeispielen können Lagerring und Flansch auch mehrstückig ausgebildet sein.

Durch die mechanische Trennung von Lager und Antriebswelle kann sich die Wartung erheblich erleichtern. Bei Wartungsarbeiten an dem Lager oder der Welle muss nicht mehr die ganze Antriebswelle, bzw. der ganze Antriebsstrang gewechselt werden, sondern Antriebswelle und Lager können nach der mechanischen Entkopplung auch getrennt voneinander entnommen und gewartet werden. Dieser Vorteil wächst mit der Anzahl der mechanisch entkoppelten Lager. In anderen Worten kann die Antriebswelle über mehrere entkoppelte bzw. angeflanschte Lager gelagert werden, wobei sich der Wartungsaufwand aufgrund der Möglichkeit der getrennten Handhabung für jedes entkoppelte Lager reduziert. Darüber hinaus kann der Wartungsaufwand durch die reibkrafterhöhende Beschichtung weiter gesenkt werden, da die Befestigungsmittel, z.B. für die Befestigung des Lagers an der Antriebswelle, und damit Montage- und Wartungszeiten reduziert oder minimiert werden können.

Ein weiterer Kerngedanke der vorliegenden Erfindung liegt in der Ausstattung eines Lagers mit einem Flansch, so dass dieses kraftschlüssig mit einer Antriebswelle gekoppelt werden kann und in einer entsprechenden Beschichtung des Flansches. Eine derartige Ankopplung kann dann an beiden Enden der Antriebswelle erfolgen, d.h. im Falle eines Unterwasserkraftwerks zur Lagerung des einer Wasserturbine zugewandten Bereichs und /oder des einem Generator zugewandten Bereichs. Die Radiallager können an den jeweiligen Enden der Welle angeflanscht werden. Die Radiallager können dann aus einem Stück bestehen, ein Aufschweißen von Ringen auf die Welle kann entfallen. Die Handhabung der Radiallager bei ihrer Herstellung kann somit erleichtert werden. Diese können beliebig beschichtet werden, ein Beschichten der Welle kann mit einer Gleitbeschichtung kann entfallen.

In Ausführungsbeispielen kann auch die Antriebswelle mit einer Reibbeschichtung beschichtet sein, um die Reibkraft zwischen der Antriebswelle und einem mechanisch ankoppelbaren Bauteil, wie z.B. einem Lagerring bzw. Flansch, eine weitere Antriebswelle, einen Rotor, einen Generator, eine Turbine etc. zu erhöhen.

Dies kann eine separate Fertigung der Radiallager ermöglichen. Darüber hinaus reduzieren sich das Gewicht der Antriebswelle und das Gewicht des Radiallagers. Insgesamt können der Logistikaufwand und die damit verbundenen Kosten reduziert werden.

In einem Ausführungsbeispiel kann die Bearbeitung der nun kleineren Bauteile, d.h. Radiallager und Antriebswelle, getrennt voneinander ermöglicht werden. Dadurch können kleinere Fertigungsanlagen genutzt werden, was die Fertigungskosten weiter reduzieren kann. Darüber hinaus kann die Fertigungspräzision erhöht werden und die Radiallager können separat individuell beschichtet werden. Dadurch ergeben sich auch hinsichtlich der Beschichtung weitere Möglichkeiten, wie z.B. Tauchen/Badbehandlung, da eine direkte Beschichtung auf der Wellenoberfläche nicht mehr notwendig ist. Auch kommt es nicht mehr zu Verzug durch Schweißen und es sind keine Reinigungsarbeiten nötig, die bei konventionellen Konzepten nach dem Verschweißen anfielen.

Das komplexe konventionelle System kann somit durch Ausführungsbeispiele in mehrere vereinfachte Teilsysteme zerlegt werden. Die einzelnen Teilsysteme können aufwandsgünstiger bearbeitet werden, bzw. können diese erst aufgrund der Zerlegung bestimmten Prozess- oder Bearbeitungsschritten zugänglich gemacht werden. Dies kann eine bessere Anpassung bzw. Optimierung der Prozesse an die Teilsysteme und damit eine Kostenreduktion ermöglichen. Stillstandszeiten der Anlage können reduziert werden, insbesondere dadurch, dass nunmehr Lagerwechsel vor Ort möglich sind. Auch wird durch Ausführungsbeispiele eine Lageraufbereitung ohne großen Logistikaufwand möglich. Dadurch kann eine Kostenreduktion bei Herstellung - Montage und Wartung erzielt werden. In Ausführungsbeispielen können Lager separat bearbeitet werden, dadurch werden tribologisch günstigere Oberflächengestaltung möglich, beispielsweise ein Einbringen von anwendungsgerechten Schmiernuten und Bohrungen erleichtert. Darüber hinaus können Schmierstoffleitungen und Zuführsysteme für Schmierstoffe leichter in das System eingebracht werden, wodurch sich letztendlich wiederum der Wartungsaufwand und damit die Betriebskosten senken lassen können.

Durch Beschichtung der Antriebswelle oder der Befestigungsseite des Lagers oder von beiden kann der Befestigungsaufwand des entkoppelten Lagers reduziert werden. Die Befestigungsmittel können entsprechend reduziert werden, wenn die Reibung zwischen Lagerringsegment bzw. Lagerring auf deren Befestigungsseite entsprechend vergrößert werden kann. Entsprechend weniger Befestigungsmittel, wie Schrauben, Nieten, etc. sind notwendig, um eine sichere Befestigung zu gewährleisten. Um eine sichere Befestigung zu gewährleisten, muss ein Verdrehen bzw. Mitwandern des Lagerrings in Umfangsrichtung verhindert werden. Dies sollte auch dann gewährleistet sein, wenn es einmal zu einem Kontakt zwischen Lagerinnen- und Lageraußenring kommen sollte. Die gleichen Betrachtungen treffen zu, wenn die mechanische Kopplung der Antriebswelle an ein anderes Bauteil, wie beispielsweise einen Lagerring, einen Flansch, eine weitere Antriebswelle, einen Rotor, einen Generator, eine Turbine etc., betrachtet wird.

Die vorliegende Erfindung beruht daher ferner auf dem Kerngedanken, eine Beschichtung des Lagerrings bzw. dessen Segmente und/oder einem zu lagernden Bauteil, wie z.B. einer Antriebswelle, derart vorzusehen, dass sich ein Kraftschluss zwischen dem jeweiligen Lagerring und dem zu lagernden Bauteil, wie z.B. der Antriebswelle, bzw. zwischen der Antriebswelle und einem weiteren zu lagernden Bauteil, erhöht. Die Beschichtung kann verschiedene Eigenschaften besitzen wie z.B. einen extrem großen Reibkoeffizienten. Die Gegenseite kann ebenfalls beschichtet werden, d.h. in Ausführungsbeispielen können sowohl der Lagerring, bzw. dessen Segment, als auch das zu lagernde Bauteil, z.B. eine Antriebswelle, beschichtet sein. In weiteren Ausführungsbeispielen können die Antriebswelle und/oder ein damit mechanisch zu koppelndes Bauteil (Lagerring, Flansch, Rotor, Generator, Turbine, weitere Antriebswelle, etc.) beschichtet sein.

Die Segmente können in Ausführungsbeispielen so auf die Welle montiert werden, dass die Seite mit der Reibbeschichtung auf der Stirnseite der Antriebswelle bzw. auf der Wellenschulter und/oder auf der Wellenachse liegt. Die Befestigung kann z.B. mittels Schrauben, Bolzen, Stiften, Nieten, Kleben, Stecken, etc. erfolgen. Durch die Reibbeschichtung kann der Widerstand der Segmente gegen ein Mitdrehen bzw. Mitwandern in Umfangsrichtung stark erhöht werden. Dies kann in Ausführungsbeispielen zur Folge haben, dass wesentlich weniger Befestigungselemente für die Anbringung der Segmentstücke an der Wellenschulter erforderlich sind. Dadurch wird auch die Welle selbst weniger stark geschwächt.

Die genannten Vorteile können insbesondere in Ausführungsbeispielen von Gleitlagern auftreten, da hier, insbesondere beim Einsatz in wassergeschmierten Unterwasserkraftwerken, hohe Anlaufmomente und damit Anlaufbelastungen vorkommen können. Die Überwindung dieser hohen Anlaufdrehmomente kann gerade durch die Beschichtung und die erhöhte Reibkraft in Ausführungsbeispielen erleichtert werden.

Ausführungsbeispiele der vorliegenden Erfindung werden im Folgenden anhand der beiliegenden Figuren im Detail erläutert. Es zeigen
Figuren 1a-e Ausführungsbeispiele von beschichteten Lagerringen, bzw. Lagerringsegmenten, und Antriebswellen;
Figur 2 ein weiteres Ausführungsbeispiel eines beschichteten Lagerrings, bzw. von Lagerringsegmenten; und
Figur 3 ein konventionelles Unterwasserkraftwerk.

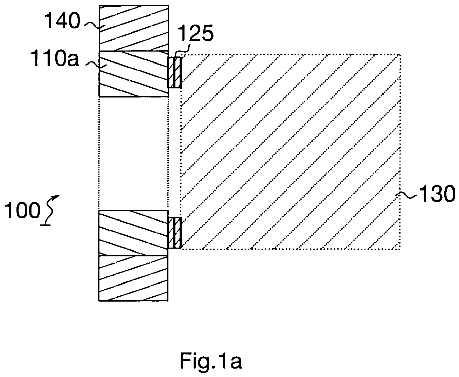

Die Figur 1a zeigt ein Ausführungsbeispiel eines Lagerrings 10a, bzw. eines Lagerringsegments 110a. Unter einem Lagerringsegment 110a wird im Folgenden ein Teil eines Lagerrings 110a verstanden. Das Lagerringsegment kann demnach beispielsweise einen gewissen Winkelbereich eines Lagerrings 110a umfassen, d.h. in Ausführungsbeispielen können mehrere gleiche oder auch ungleiche Lagerringsegmente einen Lagerring bilden. Ausführungsbeispiele von Lagerringsegmenten sind nicht auf eine bestimmte Unterteilung eines Lagerrings in Lagerringsegmente beschränkt, es sind beliebige axiale und auch radiale Segmentierungen denkbar.

In der Figur 1a ist dabei das gesamte Radiallager 100 mit einem Innenring 110a und einem Außenring 140 in einem Querschnitt dargestellt. In anderen Worten ist der Lagerring 110a, bzw. das Lagerringsegment 110a, in dem Ausführungsbeispiel der Figur 1a als Lagerinnenring 110a, bzw. als Lagerinnenringsegment 110a, ausgeführt. Bei der folgenden Erläuterung von Ausführungsbeispielen wird Bezug auf einen Lagerring genommen, wobei sich die Ausführungen ebenso auf ein Lagerringsegment beziehen. Auf eine Wiederholung gleicher Ausführungen für einen Lagerring und ein Lagerringsegment kann teilweise zugunsten der Übersichtlichkeit verzichtet werden. Dies betrifft ebenso Ausführungen hinsichtlich eines Flansches bzw. eines Flanschsegmentes.

Die Figur 1a zeigt darüber hinaus einen Teil der Antriebswelle 130. Das Lagerringsegment 110a für ein Radiallager 100 umfasst eine Befestigungsmöglichkeit zur Befestigung des Lagerringsegments 110a an einem zu lagernden Bauelement 130, wobei das Lagerringsegment 110a eine Beschichtung 125 umfasst, die eine Reibkraft zwischen dem Lagerringsegment 110a und dem zu lagernden Bauteil 130 erhöht. Die Fig. 1a zeigt dabei die Beschichtung 125 am Beispiel des Innenlagerrings 110a. Darüber hinaus zeigt die Fig. 1a eine beidseitige Beschichtung 125, d.h. sowohl der Innenlagerring 100a ist gemäß einem Ausführungsbeispiel beschichtet als auch die Antriebswelle 130. Im Allgemeinen umfassen Ausführungsbeispiele demnach auch eine Antriebswelle 130 für ein Unterwasserkraftwerk, die eine Beschichtung 125 aufweist, die eine Reibkraft zwischen der Antriebswelle 130 und einem daran anzubringenden Lagerringsegment 110a oder einem daran anzubringenden Lagerring 110a erhöht.

Es sei darauf hingewiesen, dass im Folgenden die Beschichtung in den Figuren jeweils zweiseitig dargestellt ist, Ausführungsbeispiele aber ebenfalls einseitige Beschichtungen umfassen. Darüber hinaus ist die Beschichtung in den Figuren der Übersichtlichkeit halber lokal begrenzt dargestellt. In Ausführungsbeispielen kann die Beschichtung auch größere Flächen wie z.B. ganze Seitenflächen oder Oberflächen umfassen.

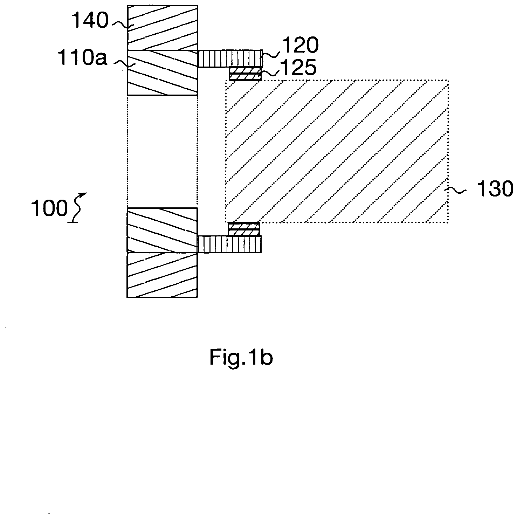

In Ausführungsbeispielen kann das Lagerringsegment 110a oder der Lagerring 110a als Befestigungsmöglichkeit an einem axialen Ende einen Flansch 120 aufweisen, wobei der Flansch 120 die Beschichtung 125 aufweist. In einfachen Ausführungsbeispielen kann die Befestigungsmöglichkeit auch beispielsweise durch Bohrungen realisiert sein. Ein solches Ausführungsbeispiel illustriert die Fig. 1b. Der dort gezeigte Lagerring 110a für ein Radiallager 100 für eine Antriebswelle 130 weist an einem axialen Ende einen Flansch 120 auf, wobei der Flansch 120 die Befestigungsmöglichkeit zur Befestigung des Lagerrings 110a an der Antriebswelle 130 aufweist. Die Befestigungsmöglichkeit kann beispielsweise Befestigungsmittel, wie z.B. Bohrungen, Gewinde, Schweißbolzen, Schweißmuttern, Schrauben, Stege oder Nuten, Klemmen, etc. umfassen.

Unter einem Flansch sei hier ein Steg, eine Nase, eine Feder, ein Fortsatz o.ä. verstanden, der zur Befestigung an einem anderen Bauelement dient. Das jeweilige andere Bauelement kann dabei ebenfalls Befestigungsmittel oder Befestigungsmöglichkeiten wie Bohrungen, Gewinde, Schrauben, Schweißbolzen, Stege oder Nuten, Klemmen etc. aufweisen.

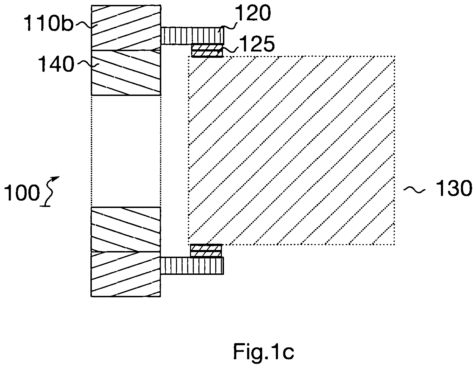

Darüber hinaus kann der Flansch 120 in Ausführungsbeispielen Nuten, Stege, oder eine Verzahnung aufweisen, um beispielsweise einen sicheren Eingriff an der Antriebswelle 130 und eine gegen ein Verdrehen gesicherte Verbindung mit der Antriebswelle 130 zu erreichen. Die Antriebswelle kann in Ausführungsbeispielen entsprechend ausgebildet sein. In Ausführungsbeispielen kann die Antriebswelle ebenfalls Befestigungsmittel wie z.B. auch einen Flansch aufweisen.
In Ausführungsbeispielen kann der Lagerring 110 als Lagerinnenring 110a, wie in den Figuren 1a und 1b gezeigt, oder als Lageraußenring 110b ausgeführt sein. Die Figur 1c zeigt ein Ausführungsbeispiel bei dem der Lagerring 110b als Lageraußenring 110b ausgebildet ist. In anderen Worten ausgedrückt, kann der Flansch 120 auch an einem Lageraußenring 110b angebracht sein. In der Figur 1c ist der Lagerinnenring mit den Bezugszeichen 140 gekennzeichnet.

Wie in den Ausführungsbeispielen, die in den Figuren 1a, 1b und 1c dargestellt sind, zu erkennen ist, kann sich der Flansch 120 entlang der Rotationsachse des Lagers 100, das heißt in axialer Richtung, erstrecken. Wie die oben aufgeführten Ausführungsbeispiele zeigen, kann der Flansch 120 zumindest teilweise die Antriebswelle 130 umschließen und mit dieser beispielsweise verschraubt, vernietet, o.ä. werden. Da in Ausführungsbeispielen auch Hohlwellen zum Einsatz kommen, ist es darüber hinaus denkbar, dass der Flansch 120 auch in die Antriebswelle 130 hineinragt und von innen an der Antriebswelle 130 befestigt wird. Die Antriebswelle 130 kann in Ausführungsbeispielen über radiale Befestigungsbohrungen verfügen. Je nachdem, ob der Flansch 120 die Antriebswelle 130 innen oder außen überlappt, können die Befestigungsbohrungen, Gewinde oder allgemein die Befestigungsmittel innen oder außen an der Antriebswelle 120 vorgesehen sein.

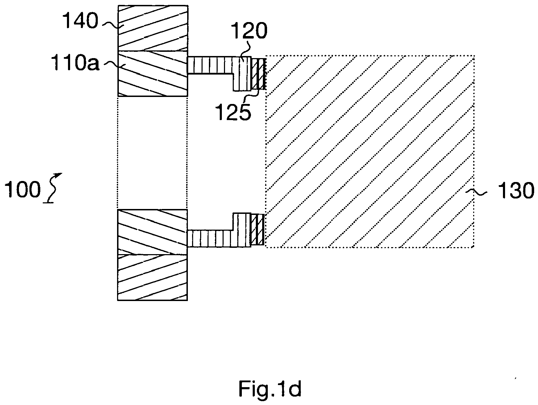

Ein weiteres Ausführungsbeispiel ist in der Figur 1d gezeigt. Die Figur 1d zeigt wiederum ein Radiallager 100 mit einem Lagerring 110a, der hier als Lagerinnenring 110a ausgebildet ist. Die Figur 1d zeigt darüber hinaus einen Lageraußenring 140. In diesem Ausführungsbeispiel ist darüber hinaus der Flansch 120 zu erkennen, der hier auch über eine radiale Ausdehnung verfügt. Die radiale Ausdehnung des Flansches 120 ermöglicht eine Befestigung an der Stirnseite der Antriebswelle 130, die dann beispielsweise Befestigungsbohrungen in axialer Richtung aufweisen kann. Die Beschichtung 125 kann sich demnach in Ausführungsbeispielen auch auf der Stirnseite des Flansches 120 befinden.

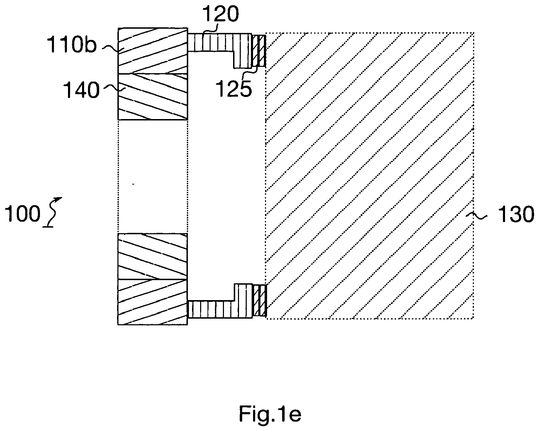

Die Figur 1e zeigt ein weiteres Ausführungsbeispiel, bei dem der Lagerring 110b als Lageraußenring 110b ausgebildet ist. Auch hier ist zu erkennen, dass der Flansch 120 neben einer axialen Ausdehnung auch eine radiale Ausdehnung mit entsprechend angeordneter Beschichtung aufweist. Denkbar sind auch andere Ausführungsbeispiele, bei denen der Flansch 120 lediglich eine radiale Ausdehnung aufweist, das heißt nicht primär in axialer Richtung von dem Lagerring 110 weg ragt. In anderen Worten, kann der Lagerring 110 in Ausführungsbeispielen einen Flansch 120 aufweisen, der sich in axialer und/oder in radialer Richtung erstreckt und die Beschichtung 125 an einer dem zu lagernden Bauteil 130 zugewandten Seite aufweist.

Ausführungsbeispiele können auch ein Lagerringsegment 110; 110a; 110b bzw. einen Lagerring 110;110a;110b für ein Radiallager 100 für eine Antriebswelle 130 eines Unterwasserkraftwerks umfassen. Ferner kann an einem axialen Ende ein Flansch 120 oder ein Flanschsegment 120 vorgesehen sein, wobei der Flansch 120 oder das Flanschsegment 120 eine Befestigungsmöglichkeit zur Befestigung des Lagerringsegments 110;110a;110b an der Antriebswelle 130 aufweist. Ferner umfassen Ausführungsbeispiele die Beschichtung 125, die die Reibkraft zu dem zu lagernden Bauelement erhöht.

Auch das Lagerringsegment 110;110a;110b kann als Lagerinnenringsegment 110a oder als Lageraußenringsegment 110b ausgeführt sein. Der Flansch 120 oder das Flanschsegment 120 kann sich in Ausführungsbeispielen in axialer und/oder in radialer Richtung erstrecken. In anderen Worten, kann die Reibkraft zwischen dem Lagerringsegment oder dem Lagerring 110;110a;110b und dem zu lagernden Bauelement 130 entlang der Rotationsachse des Bauelementes 130 erhöht werden, d.h. auf einer axialen Berührungsfläche (Berührungsfläche mit axialer Ausdehnung) mit dem Bauelement 130, wie z.B. in den Figuren 1b und 1c gezeigt. In weiteren Ausführungsbeispielen, wie z.B. in den Fig. 1a, 1d und 1e gezeigt, kann die Berührungsfläche auch eine radiale Ausdehnung aufweisen.

Ausführungsbeispiele umfassen demnach auch ein Lager 100, z.B. ein Gleit- oder Wälzlager 100, welches einen der oben genannten Lagerringe 110,100a,110b bzw. Lagerringsegmente 110,100a,110b aufweist.

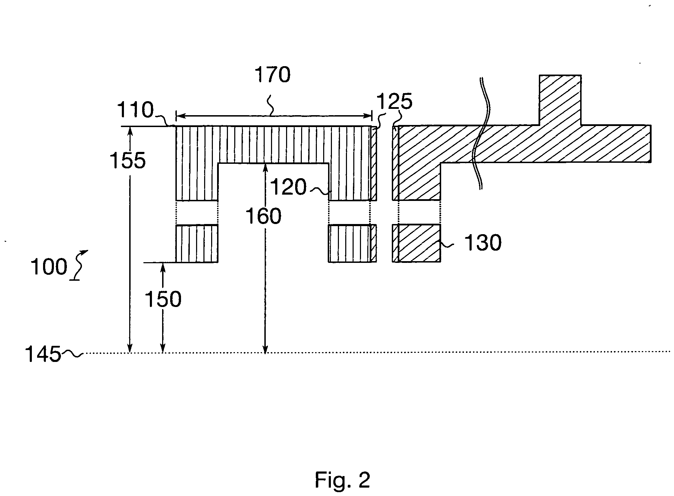

Die Figur 2 zeigt ein weiteres Ausführungsbeispiel, bei dem auf der linken Seite ein Ausschnitt eines Lagers 100 gezeigt ist. Von dem Lager 100 ist der Lagerring 110 zu sehen. Es ist ferner zu erkennen, dass der Lagerring 110 einen Flansch 120 aufweist, über den der Lagerring 110 an die Antriebswelle 130 befestigt werden kann. Darüber hinaus ist die Beschichtung 125 an der der Antriebswelle 130 zugewandten Seite des Lagerrings 110 bzw. des Flansches 120 zu sehen. In der Figur 2 ist ferner zu erkennen, dass sowohl der Flansch 120 als auch die Antriebswelle 130 über Bohrungen verfügen, über die eine Verschraubung vorgenommen werden kann. Beispielsweise können hier Schrauben vom Typ M 8 - 24 zum Einsatz kommen. In Ausführungsbeispielen können die Bohrungen beispielsweise einen Durchmesser größer gleich 8 - 50mm, z. B. 10 mm, 20 mm oder 30 mm aufweisen.

Der Lagerring 110 selbst kann in Ausführungsbeispielen einen Außendurchmesser von beispielsweise 2200 mm aufweisen, wobei in der Figur 2 der Außenradius 155 zur Rotationsachse 145 des Lagers dargestellt ist. Generell kann der Außendurchmesser (doppelter Außenradius 155) auch größer gleich 100, 1000, 2000, 3000, 4000, 6000 oder 10000 mm sein. In einem Ausführungsbeispiel umfasst der Innendurchmesser (der doppelte Innenradius 150) des Lagerrings 110 etwa 1800 mm. In Ausführungsbeispielen kann der Innendurchmesser (doppelter Innenradius 150) des Lagerrings 110 auch größer gleich 50, 500, 1000, 1500, 2000, 3000, 5000 oder 10000 mm sein.

In einem Ausführungsbeispiel kann der Innendurchmesser des Lagermantels 2000 mm umfassen, dies entspricht dem doppelten Innenradius 160 des Lagermantels gemäß Figur 2. In anderen Worten ausgedrückt, kann der Lagerring 110 eine Mantelstärke von 200 mm aufweisen. In Ausführungsbeispielen sind aber auch doppelte Innenradii 160 des Lagermantels größer gleich 80, 100 , 1000, 2000, 3000, 4000, 6000 oder 10000 mm denkbar. Die Mantelstärke des Lagerrings 110 kann in Ausführungsbeispielen auch größer gleich 50, 100, 200, 300 oder 400 mm sein.

Die Lagerhöhe 170, d.h. die axiale Erstreckung des Lagerrings 110, kann beispielsweise 1000 mm betragen. In Ausführungsbeispielen sind aber auch Lagerhöhen 170 größer gleich 100, 200, 300, 500 , 1000, 2000, 3000 oder 4000 mm denkbar.

Wie bereits oben erläutert, können Ausführungsbeispiele auch eine Antriebswelle 130 für ein Unterwasserkraftwerk umfassen, die an zumindest einem axialen Ende Befestigungsmittel oder eine Befestigungsmöglichkeit für ein daran anzubringendes Bauteil, wie z.B. einen Flansch 120 eines Lagerrings 110 oder den Lagerring selbst, und die Beschichtung 125 aufweist. Die Antriebswelle 130 kann eine Beschichtung 125 aufweisen, die eine Reibkraft zwischen der Antriebswelle 130 und einem daran anzubringenden Bauteil 110;110a;110b erhöht. Bei dem anzubringenden Bauteil kann es sich in Ausführungsbeispielen z.B. um einen Lagerring, einen Flansch, einen Rotor, einen Generator, eine Turbine, eine weitere Antriebswelle, etc. handeln. Darüber hinaus kann die Antriebswelle 130 selbst auch für den Einsatz in einem Generator oder einer Turbine ausgebildet sein.

Es sein darauf hingewiesen, dass in den beiliegenden Figuren Ausführungsbeispiele dargestellt sind, die sich mit der mechanischen Kopplung eines Lagerrings und einer Antriebswelle befassen. Ausführungsbeispiele sind jedoch nicht auf die mechanische Kopplung dieser Komponenten beschränkt, beispielsweise kann die Antriebswelle auch mit den anderen Bauteilen, s.o., gekoppelt werden.

Die Antriebswelle 130 kann in Ausführungsbeispielen auch selbst einen Flansch umfassen, der die Beschichtung aufweist. Die Antriebswelle 130, oder auch deren Flansch, kann axiale und oder radiale Bohrungen aufweisen. In anderen Ausführungsbeispielen kann die Antriebswelle 130 einen Flansch umfassen, der ausgebildet ist, um an dem Lagerring 110, dessen Flansch 120 oder einem anderen daran anzubringenden Bauteil befestigt zu werden. In anderen Worten kann in Ausführungsbeispielen eine Befestigung zwischen anzubringendem Bauteil, wie z.B. Lagerring 110, und Antriebswelle 130 auch durch beidseitige Flansche erfolgen, wobei jeweils einer oder auch beide der Flansche die Beschichtung aufweisen können. In Ausführungsbeispielen kann die Antriebswelle 130 auch Verzahnungen als Befestigungsmittel für einen Flansch 120, dessen Segmente oder auch für einen weiteren Flansch aufweisen. In weiteren Ausführungsbeispielen kann die Antriebswelle 130 auch Bohrungen und eine zusätzliche Verzahnung aufweisen. Insofern kann mit der Beschichtung der Antriebwelle 130 auch die Beschichtung eines an der Antriebswelle 130 angebrachten Flansches gemeint sein.

Ausführungsbeispiele umfassen auch ein Unterwasserkraftwerk mit einem Lagerringsegment 110;110a;110b, einem Lagerring 110;110a;110b, einem Lager 100 oder einer Antriebswelle 130 gemäß obiger Beschreibung.

Die Beschichtung 125 kann in Ausführungsbeispielen ein anderes Material als das Lagerringsegment 110;110a;110b, der Lagerring 110;110a;110b oder die Antriebswelle 130 umfassen. In Ausführungsbeispielen kann die Beschichtung 125 Nickel, Wolfram, Kobalt, Chrom, Aluminium, Diamant oder einen keramischen Werkstoff umfassen. Die Beschichtung 125 kann generell Partikel mit einer Mohshärte größer gleich 5 aufweisen. In Ausführungsbeispielen kann die Beschichtung 125 auch Partikel mit einer Mohshärte größer gleich 6, 7, 8 oder 9 aufweisen. Generell kann die Wahl der Partikel bzw. deren Härte entsprechend der verwendeten Materialien erfolgen, um eine Erhöhung der Reibkraft zu erzielen.

In Ausführungsbeispielen können das Lagerringsegment 110;110a;110b, der Lagerring 110;110a;110b oder die Antriebswelle 130 einen metallischen, einen keramischen oder einen Mischwerkstoff bzw. einen teilkeramischen Werkstoff umfassen. Die Beschichtung 125 kann in Ausführungsbeispielen einseitig, d.h. entweder auf der Seite des Lagerrings oder auf der Seite der Antriebswelle, oder auch beidseitig vorgesehen sein.

Die Beschichtung 125 dient dazu, eine Reibkraft und damit den Kraftschluss zu dem zu lagernden Bauelement zu erhöhen. Die Reibbeschichtung 125 kann dabei als Hauptbestandteil ein hochfestes, zähes und hartes Metall aufweisen, wobei die Beschichtung 125 in wenigstens einem Oberflächenbereich mit einer quadratähnlichen Grundfläche mit einer Seitenlänge im Bereich um einen Millimeter herum, durch ein Profil mit vielen spitzen Bergen und Tälern gekennzeichnet sein kann. In diesem Oberflächenbereich kann ein Anteil derjenigen Berge und Täler, die eine zur Grundfläche planparallele Ebene überragen, die vom höchsten Berg einen Abstand im Bereich zwischen 15 und 30 pm aufweist, größer als etwa 20% sein.

Die Topographie der Reibbeschichtung 125, insbesondere bei Ausbildung der Beschichtung als flammgespritzte Molybdänbeschichtung, kann einen hohen Flächentraganteil, beispielsweise größer 20%, sowie große Haftreibungszahlen, beispielsweise größer 0,6 oder sogar größer 0,65 bezogen auf eine Paarung besagter Beschichtung mit einem stählernen Gegenstück, bzw. mit der Stirnseite der Antriebswelle, der Wellenspurscheibe oder der Wellenschulter, aufweisen.

In Ausführungsbeispielen kann die Reibbeschichtung 125 Partikel mit einer Mohshärte größer gleich 9 und/oder einer vorgebbaren mittleren Korngröße aufweisen. In Ausführungsbeispielen können aber auch Partikel mit einer Mohshärte größer gleich 5, 6, 7 oder 8 vorkommen. Ferner kann die Beschichtung eine Dicke in etwa entsprechend der halben mittleren Korngröße aufweisen. Der Beschichtungsträger, d.h. das unbeschichtete Lagerringsegment 110;110a;110b, der unbeschichtete Lagerring 110;110a;110b oder die unbeschichtete Antriebswelle 130 kann eine Vertiefungen umfassende Oberfläche aufweisen. Ein Anteil von ca. 85% oder mehr der Vertiefungen kann gegenüber einer die jeweilige Vertiefung umgebenden Oberflächenumgebung mit einer Tiefe kleiner ca. 10% und/oder einer Öffnungsweite kleiner gleich ca. 15% der Beschichtungsdicke ausgebildet sein. Die Beschichtung 125 kann auf der Oberfläche des Beschichtungsträgers aufgebracht sein und die Partikel wenigstens in einem unteren, zum Beschichtungsträger hin orientierten Bereich, umschließen.

Die Oberfläche des Beschichtungsträgers, kann demnach derart ausgebildet sein, dass die furchenartigen Vertiefungen gegenüber einer die jeweilige Vertiefung umgebenden Oberflächenumgebung, eine Tiefe kleiner ca. 10% der Beschichtungsdicke und/oder einer Öffnungsweite kleiner ca. 15% der Beschichtungsdicke aufweisen. So kann eine optimale Haftung für die Beschichtung 125 sichergestellt und gleichzeitig verhindert werden, dass Partikel derart in Vertiefungen verschwinden, dass sie nicht zur Reibungserhöhung der Beschichtungsanordnung beitragen.

Die Reibbeschichtung 125 kann beispielsweise Nickel, Wolfram, Kobalt, Chrom, Aluminium, Diamant oder einen keramischen Werkstoff aufweisen. Die Beschichtung 125 kann beispielsweise aus galvanisch aufgebrachtem Nickel gebildet werden, so dass für den Beschichtungsträger gleichzeitig eine Schutzschicht gegen Korrosion verursachende und andere Umwelteinflüsse erzeugt wird.

Darüber hinaus kann die Beschichtung oder können die Beschichtungen Hartpartikel, insbesondere Partikel mit dem Härtegrad von Diamant oder kubischem Bor-Nitrat (CBN) oder von Korund oder Carbid, aufweisen. Die Beschichtungen können sich dadurch auszeichnen, dass sie als reibwerterhöhende Beschichtungen die lösbare Verbindung zwischen den Bauteilen verbessern.

In Ausführungsbeispielen kann die Beschichtung Zinksilicat umfassen oder die Partikel können z.B. durch Spritzverzinken oder dergleichen entsprechend mit einer reibwerterhöhenden Beschichtung ausgebildet sein. Dadurch, dass die Verbindung spritzverzinkt ist, kann ebenfalls eine zuverlässige, reibwerterhöhende Beschichtung bereitgestellt werden.

In Ausführungsbeispielen können als Partikel Hartpartikel, wie z.B. Diamant verwendet werden, wobei die Partikelgröße größer als 30 pm, vorzugsweise mehr als 35 pm betragen kann. Z.B. kann eine Beschichtung 125 galvanisch auf Nickelbasis zur Diamantbeschichtung mit einer mittleren Partikelgröße von 46 pm (Diamant D46) erzeugt werden.

In Ausführungsbeispielen mit einseitiger Beschichtung 125 kann das Material des Lagerringsegments 110;110a;110b, der Lagerrings 110;110a;110b oder der Antriebswelle 130 mit einer größeren Mohshärte und/oder einer größeren Zugfestigkeit gewählt werden als das Material der Antriebswelle 130 oder auch eines Gehäuses, also des zu lagernden Bauelements. Daher können sich die über die Beschichtung 125 hinausragenden Bereiche der Partikel in das zu lagernde Bauelement eindrücken und so die Reibung erhöhen. Die Beschichtung 125 unterhalb der Partikel sowie die Bereiche des Beschichtungsträgers unterhalb der Partikel können gegenüber dem Eindrücken in das Gegenelement/Bauelement nur geringfügig verformt werden. In beidseitig beschichteten Ausführungsbeispielen können auch insbesondere eine harte Beschichtung mit den o.g. Eigenschaften und eine weichere Beschichtung, die gerade zum Aufnehmen oder sich Eindrücken der Partikel vorgesehen ist, vorliegen.

In Ausführungsbeispielen können als Reibbeschichtung 125 Partikel in einer oder wenigen Lagen aufgetragen werden, mit einem sich daran anschließenden Fixieren der Partikel durch ein galvanisch aufgebrachtes Metall, insbesondere Nickel, so dass eine Partikellage fixiert wird, wobei beim Auftragen mehrerer Lagen die überschüssigen Lagen beispielsweise durch ein Bürsten nach dem Fixieren entfernt werden können. Beispielsweise ist eine Beschichtung 125 denkbar, bei der aus der Nickelschicht herausragende Partikelbereiche über 25%, oder bis 40% der Oberfläche der Beschichtung ausmachen, womit letztendlich sehr hohe Haftreibungszahlen von größer 0,7 und auch über 0,8 erzielbar sind. Dabei ist unter einlagig zu verstehen, dass bei einem überwiegenden Anteil der beschichteten Oberfläche, insbesondere größer 75%, tatsächlich nur eine Lage von Partikeln fixiert wird, und lediglich in kleineren Teilbereichen der beschichteten Oberfläche die Partikel auch mehrlagig, insbesondere zweilagig anhaften können.

Als Beschichtungsverfahren sind z.B. thermoplastisches Polymerbeschichten, Nanobeschichten, Plasmabeschichten, Karbidbeschichten, PVD, CVD (Beschichten durch chemisches Gasphasenabscheiden, von engl. chemical vapour depostion), Beschichten mit TiC, TiCN, TiN, AlTiN, DLC (Beschichten mit diamantähnlichem Kohlenstoff, von engl. diamond-like carbon), HVOF, etc., denkbar.

### Bezugszeichenliste

- 100: Lager
- 100a: Lagerinnenring
- 100b: Lageraußenring
- 120: Flansch
- 125: Beschichtung
- 130: Antriebswelle
- 140: Lagerring
- 145: Rotationsachse
- 150: Innenradius des Lageraußenrings
- 155: Außenradius
- 160: Innenradius des Lagermantels
- 170: Lagerhöhe
- 300: Maschinengondel
- 305: Haube
- 310: Wasserturbine
- 315: Segment
- 320: Segment
- 325: Antriebswelle
- 330: Segment
- 335: Generator
- 340: Haube
- 345: Radialgleitlager
- 350: Radialgleitlager
- 355: Axialgleitlager
- 360: Axialgleitlager
- 365: Spurscheibe

## Patentansprüche

1. Ein Lagerringsegment (110;110a;110b) für ein Radiallager (100), das eine Befestigungsmöglichkeit (120) zur Befestigung des Lagerringsegments (110;110a;110b) an einem zu lagernden Bauelement (130) umfasst, wobei das Lagerringsegment (110;110a;110b) eine Beschichtung (125) umfasst, die eine Reibkraft zwischen dem Lagerringsegment (110;110a;110b) und dem zu lagernden Bauteil (130) erhöht.

2. Ein Lagerring (110;110a;110b) für ein Radiallager, der eine Befestigungsmöglichkeit (120) zur Befestigung des Lagerrings (110;110a;110b) an einem zu lagernden Bauelement (130) umfasst, wobei der Lagerring (110;110a;110b) eine Beschichtung (125) umfasst, die eine Reibkraft zwischen dem Lagerring (110;110a;110b) und dem zu lagernden Bauteil (130) erhöht.

3. Das Lagerringsegment (110;110a;110b) oder der Lagerring (110;110a;110b) gemäß einem der vorangehenden Ansprüche, das bzw. der als Befestigungsmöglichkeit an einem axialen Ende einen Flansch (120) aufweist, wobei der Flansch (120) die Beschichtung (125) aufweist.

4. Das Lagerringsegment (110;110a;110b) oder der Lagerring (110;110a;110b) gemäß Anspruch 3, bei dem sich der Flansch (120) in axialer Richtung erstreckt und/oder bei dem sich der Flansch (120) in radialer Richtung erstreckt.

5. Das Lagerringsegment (110;110a;110b) oder der Lagerring (110;110a;110b) gemäß einem der vorangehenden Ansprüche, das bzw. der als Lagerinnenring (110a) oder Lageraußenring (110b) ausgeführt ist.

6. Das Lagerringsegment (110;110a;110b) oder der Lagerring (110;110a;110b) gemäß einem der vorangehenden Ansprüche, das bzw. der zur Lagerung einer Antriebswelle (130) eines Unterwasserkraftwerks angepasst ist.

7. Ein Lager (100) mit einem Lagerring (110;110a;110b) oder einem Lagerringsegment (110;110a;110b) gemäß einem der vorangehenden Ansprüche.

8. Eine Antriebswelle (130) für ein Unterwasserkraftwerk, die eine Beschichtung (125) aufweist, die eine Reibkraft zwischen der Antriebswelle (130) und einem daran anzubringenden Bauteil (110;110a;110b) erhöht.

9. Das Lagerringsegment (110;110a;110b), der Lagerring (110;110a;110b), das Lager (100) oder die Antriebswelle (130) gemäß einem der vorangehenden Ansprüche, wobei die Beschichtung (125) Nickel, Wolfram, Kobalt, Chrom, Aluminium, Diamant oder einen keramischen Werkstoff umfasst und/oder wobei die Beschichtung (125) Partikel mit einer Mohshärte größer gleich 5 aufweist.

10. Ein Unterwasserkraftwerk mit einem Lagerringsegment (110;110a;110b), einem Lagerring (110;110a;110b), einem Lager (100) oder einer Antriebswelle (130) gemäß einem der vorangehenden Ansprüche.
